# EUROPÄISCHE PATENTANMELDUNG

(11) **EP 1 449 728 A2**
(43) Veröffentlichungstag der Anmeldung: **25.08.2004**
(21) Anmeldenummer: 04001637.0
(22) Anmeldetag: 27.01.2004
(51) Int. Cl.: B60S 1/48, B60S 1/08

(54) **Verfahren zum Betrieb eines Wisch-Wasch-Systems für Kraftfahrzeug-Windschutzscheiben und entsprechende Wisch-Wasch-Einrichtung**

(30) Priorität: 20.02.2003 DE 10307216
(71) Anmelder: ROBERT BOSCH GMBH, 70442 Stuttgart (DE)
(72) Erfinder: Zimmer, Joachim, 77880 Sasbach (DE)

(57) **Zusammenfassung**

Bei einem Verfahren zum Betrieb eines Wisch-Wasch-Systems für Kraftfahrzeug-Windschutzscheiben wird die Wischergeschwindigkeit während des Reinigungsvorganges von einer Steuereinheit des Systems (9) in Abhängigkeit von fahrzustands- und/oder umgebungsabhängigen Eingangsparametern (v;T) adaptiv gesteuert.

## Beschreibung

Die Erfindung betrifft ein Verfahren zum Betrieb eines Wisch-Wasch-Systems für Kraftfahrzeug-Windschutzscheiben sowie eine entsprechende Wisch-Wasch-Einrichtung zur Durchführung dieses Betriebsverfahrens.

Herkömmliche Wisch-Wasch-Systeme bei auf dem Markt befindlichen Kraftfahrzeugen umfassen mindestens einen Scheibenwischer, der von einem entsprechenden Scheibenwischermotor angetrieben ist, eine Wascheinheit zum Aufsprühen von Reinigungsflüssigkeit auf die Windschutzscheibe, die von einer entsprechenden Förderpumpe für Scheibenreinigungsflüssigkeit versorgt wird, sowie eine elektronische Steuereinheit, die den Bewegungsablauf der Scheibenwischer und das Ausbringen der Scheibenreinigungsflüssigkeit steuert. Dabei sind Wisch-Wasch-Systeme mit einem sogenannten "Nassarm" bekannt, bei denen die Sprühdüsen für die Scheibenreinigungsflüssigkeit in den Wischerarm integriert sind.

Herkömmlicherweise wird beim Betätigen der Scheibenwaschanlage mit einem fest vorgegebenen, statischen Programmablauf gearbeitet, das heißt dass die Wischer grundsätzlich während des Sprühvorganges der Wascheinheit mit einem bestimmten Geschwindigkeitsprofil, etwa mit der Wischgeschwindigkeit der ersten kontinuierlichen Wischerstufe betrieben werden. Die Wischergeschwindigkeit ist damit beim Wischen und Waschen sowohl abwärts, als auch aufwärts gleichbleibend.

Bei Wisch-Wasch-Systemen mit Nassarm sind Waschprogramme mit getakteter Aktivierung der Spritzdüsen bekannt. Letztere sind nämlich in der Regel auf einer Seite des Wischers über dessen Länge verteilt amngeordnet, sodass zur Vermeidung einer Sichtbehinderung nur dann Scheibenreinigungsflüssigkeit aufgesprüht wird, wenn dies in der Wischbewegung vor dem Wischblatt erfolgt. Bei einem nachlaufenden Aufsprühen der Scheibenreinigungsflüssigkeit würde diese auf der Windschutzscheibe verbleiben, bis der Wischer beim nächsten Hub wieder über das Wischfeld fährt, das während dieses Intervalls durch die Sprühflüssigkeit stark die Sicht behindern würde. Das vorlaufende Aufbringen hat den Vorteil, dass die Benetzung der Windschutzscheibe nur kurzzeitig erfolgt und die Reinigungsflüssigkeit relativ schnell wieder weggewischt wird. Das Aufsprühen der Flüssigkeit ist für den Fahrer also kaum wahrnehmbar. Diese stark reduzierte Sichtbehinderung stellt einen erheblichen Sicherheitsgewinn dar.

Trotzdem sind die bekannten Wisch-Wasch-Systeme verbesserungsbedürftig, da sie auf äußere Gegebenheiten praktisch nicht eingehen. So ist das Reinigungsergebnis beim Betrieb von Wisch-Wasch-Systemen von mehreren Parametern abhängig. Naturgemäß beeinflussen Art und Grad der Verschmutzung der Frontscheibe genauso das Reinigungsergebnis, wie Umgebungsbedingungen, also zum Beispiel die Fahrzeuggeschwindigkeit und Außentemperatur. Ferner ist der Reinigungserfolg abhängig von der Einwirkung der Scheibenreinigungsflüssigkeit, da beispielsweise bei einer längeren Einwirkzeit Schmutzpartikel besser angelöst und damit leichter weggewischt werden können. Auch die beim Reinigungsvorgang eingesetzte Waschmittelmenge in der Scheibenreinigungsflüssigkeit stellt einen das Reinigungsergebnis beeinflussenden Parameter dar.

Davon ausgehend liegt der Erfindung die Aufgabe zugrunde, ein Verfahren zum Betrieb eines Wisch-Wasch-Systems für Kraftfahrzeug-Windschutzscheiben anzugeben, mit dem die Reinigungswirkung des Systems optimierbar ist.

Das grundsätzliche Lösungskonzept dieser Aufgabe ist im Kennzeichnungsteil des Anspruches 1 angegeben und sieht vor, dass die Wischergeschwindigkeit während des Reinigungsvorganges von der Steuereinheit in Abhängigkeit von fahrzustands- und/oder umgebungsabhängigen Parametern adaptiv gesteuert wird.

Im Unterschied zum Stand der Technik, bei dem der Wisch-Wasch-Vorgang statisch abgelaufen ist, wird aufgrund der adaptiven Anpassung der Wischergeschwindigkeit die Scheibenreinigungsflüssigkeit in optimal an die äußeren Umstände angepasster Weise zur Einwirkung gebracht.

Die adaptive Steuerung der Wischergeschwindigkeit hat den Vorteil, dass sie mit üblichen Scheibenwischermotoren und Steuereinheiten relativ einfach implementierbar ist. Dies gilt insbesondere gegenüber der offensichtlicheren Maßnahme zur Optimierung und Anpassung der Reinigungswirkung an die jeweiligen äußeren Umstände, nämlich der Erhöhung der Waschmittelmenge zum Beispiel durch Erhöhung der Fördermenge oder einem Aufsprühen der Reinigungsflüssigkeit mit erhöhtem Pumpendruck. Diese beiden Maßnahmen sind jedoch in der Regel bei konventionellen Förderpumpen für solche Systeme nicht oder nur mit unverhältnismäßig hohem apparativen Aufwand realisierbar.

Die Variierung der Wischergeschwindigkeit und insbesondere deren Reduktion während des Waschhubes beim Ausbringen von Reinigungsflüssigkeit bringt mehrere Vorteile. So wird bei einer unveränderten Förderleistung der Förderpumpe mehr Reinigungsflüssigkeit vor das Wischblatt gebracht. Dadurch erhöht sich die Dauer der Benetzung der Windschutzscheibe und damit auch die Zeit zum Lösen der Schmutzpartikel auf der Windschutzscheibe. Beide Effekte überlagern sich synergetisch, sodass bei einer vergleichsweise geringen Reduzierung der Wischergeschwindigkeit beim Reinigungsvorgang von typischerweise 40Wisch-Wasch-Zyklen pro Minute auf beispielsweise 30 Zyklen sich eine deutliche Verbesserung der Reinigungswirkung ergibt.

Bevorzugte Ausführungsformen des erfindungsgemäßen Betriebsverfahrens dienen zum Erkennen und zur Reaktion auf schwierige Reinigungssituationen. So ist es vorgesehen, die Wischergeschwindigkeit während des Reinigungsvorganges in Abhängigkeit der Fahrzeuggeschwindigkeit adaptiv zu steuern. Bei erhöhter Fahrgeschwindigkeit wird nämlich das Reinigungsmittel durch den Fahrtwind verstärkt von der Scheibe weggeblasen.

Eine schwierige Reinigungssituation tritt auch im Winter etwa bei durch Streusalz verschmutzten Windschutzscheiben auf. Da in dieser Jahreszeit die Temperaturen im Mittel niedriger sind, kann von tiefen Außentemperaturen grundsätzlich auf eine erschwerte Reinigungssituation geschlossen werden. Insoweit ist es bevorzugtermaßen vorgesehen, die Wischergeschwindigkeit in Abhängigkeit der Umgebungstemperatur adaptiv zu steuern.

Eine weitere Einflussgröße ist der Verschmutzungsgrad der Windschutzscheibe als solcher, also völlig unabhängig von anderen äußeren, wie beispielsweise jahreszeitlich bedingten Einflüssen. Insoweit kann die Wischergeschwindigkeit grundsätzlich in Abhängigkeit des Verschmutzungszustandes der Windschutzscheibe adaptiv gesteuert werden. Der Verschmutzungszustand ist dann von einem geeigneten - beispielsweise optischen - Sensor zu ermitteln. Dies kann allerdings wiederum mittelbar über einen in modernen Kraftfahrzeugen ohnehin zum Einschalten der Scheibenwischer vorhandenen Regensensor erfolgen, indem von der Tatsache, dass es regnet, mittelbar auf eine schwierige Reinigungssituation geschlossen wird.

Neben den vorstehenden "automatischen" Einflussparametern kann es gemäß einer weiteren bevorzugten Ausführungsform vorgesehen sein, dass die Anzahl der Reinigungszyklen mittels einer vom Fahrer betätigbaren Eingabeeinheit variabel einstellbar ist. So kann einerseits im Rahmen dieser Maßnahme vorgesehen werden, eine mehrfache Aktivierung der Wisch-Wasch-Anlage innerhalb eines bestimmten begrenzten Zeitfensters zu erkennen und daraus zu schließen, dass der Fahrer offensichtlich aufgrund zu schlechter Reinigungswirkung oder schwieriger Reinigungssituationen das Bedürfnis nach besserer Scheibenreinigung hat. Auch kann über die vom Fahrer betätigbare Eingabeeinheit beispielsweise durch eine länger währende Lenkstock-Schalte-Betätigung die Anzahl der Reinigungszyklen erhöhbar sein.

Falls der apparative Aufbau in Kauf genommen wird, kann schließlich in einer bevorzugten Verfahrensmaßnahme auch die adaptive Steuerung der Förderleistung der Förderpumpe für die Reinigungsflüssigkeit nach einem oder mehreren der vorstehend angegebenen fahrzeugszustands- und umgebungsabhängigen Parameter implementiert werden.

Unter vorrichtungstechnischen Aspekten ist gemäß der Erfindung eine Wisch-Wasch-Einrichtung für Kraftfahrzeug-Windschutzscheiben vorgesehen, bei der die Steuereinheit mit Signaleingängen für fahrzeugzustandsund/oder umgebungsabhängige Eingangsparameter versehen ist. Das entsprechende Betriebsprogramm zur Durchführung des Erfindungsgemäßen Verfahrens ist in der Steuereinheit implementiert. Die Signaleingänge können dabei auf in modernen Fahrzeugen zu anderen Zwecken - wie Geschwindigkeitsregelanlage oder Außentemperaturanzeige - ohnehin im Fahrzeug vorhandene Sensoren zur Bereitstellung entsprechender Signalinformationen zugreifen und diese in das Betriebsprogramm einlesen.

Weitere Merkmale, Einzelheiten und Vorteile der Erfindung ergeben sich aus der nachfolgenden Beschreibung, in der Ausführungsbeispiele anhand der beigefügten Zeichnungen näher erläutert werden. Es zeigen:
- Fig. 1 und 2: schematische Draufsichten auf eine Kfz-Windschutzscheibe mit den Scheibenwischern in Auf-bzw. Abwärtshub,
- Fig. 3: ein Blockdiagramm einer Wisch-Wasch-Einrichtung für Kraftfahrzeuge,
- Fig. 4: ein Schaubild der Winkelgeschwindigkeit eines Scheibenwischers über mehrere Reinigungszyklen hinweg nach dem Stand der Technik,
- Fig. 5 und 6: ein Schaubild der Winkelgeschwindigkeit des Scheibenwischers in Abhängigkeit des Drehwinkels über einen Zyklus "Aufwärtswischen" hinweg,
- Fig. 7: ein Grob-Schaubild zur Darstellung der Wischergeschwindigkeit und des Förderpumpenstatus in Abhängigkeit der Zeit über mehrere Reinigungs-Wischzyklen hinweg,
- Fig. 8 und 9: Schaubilder der Winkelgeschwindigkeit des Scheibenwischers in Abhängigkeit der Zeit über mehrere Reinigungszyklen hinweg,
- Fig. 10 bzw. 11: ein Schaubild der maximalen WischerWinkelgeschwindigkeit bei der Aufwärtsbewegung in Abhängigkeit der Fahrzeuggeschwindigkeit bzw. der Außentemperatur, und
- Fig. 12: ein Schaubild der Anzahl der Wisch-Wasch-Zyklen in Abhängigkeit der Betätigungsdauer einer Eingabeeinheit.

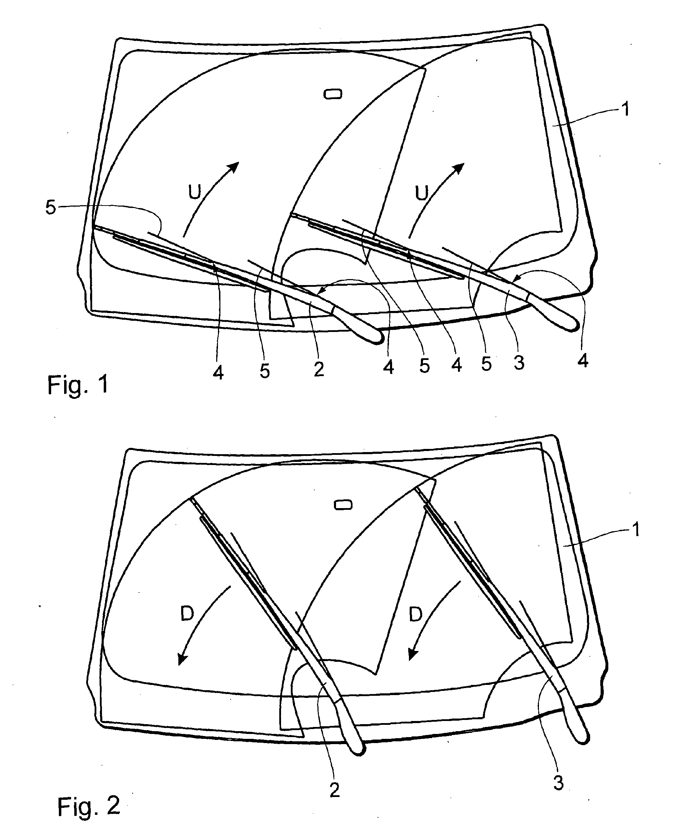

In den Fig. 1 und 2 ist schematisch die Windschutzscheibe 1 eines Kraftfahrzeuges mit zwei Scheibenwischerarmen 2, 3 dargestellt, die über hier nicht näher gezeigte Wischermotoren für die übliche Wischbewegung über die Windschutzscheibe angetrieben werden. Die Scheibenwischer sind in der sogenannten "Nassarm-Technik" ausgebildet, das heißt, dass seitlich an beiden Scheibenwischerarmen 2,3 direkt Spritzdüsen 4 mit einer nicht näher dargestellten Zuleitung angebracht sind. Diese Spritzdüsen 4 liegen auf einer Seite der Scheibenwischerarme 2, 3 und zwar bezogen auf die beigefügten Fig. 1 uns 2 auf der relativ zur Schwenkbewegung im Uhrzeigersinn vor den Armen 2, 3 liegenden Richtung. Dies ist in Fig. 1 durch entsprechende Sprühstrahlen 5 aus den Spritzdüsen 4 angedeutet.

Üblicherweise ist das Wisch-Wasch-System bei Verwendung der Nassarm-Technik so gesteuert, dass bei der Aufwärtsbewegung der Scheibenwischerarme 2, 3, wie sie in Fig. 1 durch die im Uhrzeigersinn gerichteten Pfeile U angedeutet ist, Scheibenreinigungsflüssigkeit durch Aktivierung der entsprechenden Förderpumpe ausgesprüht wird, während beim Abwärtshub - siehe Pfeile D in Fig. 2 - die Förderpumpe deaktiviert ist, also keine Reinigungsflüssigkeit austritt.

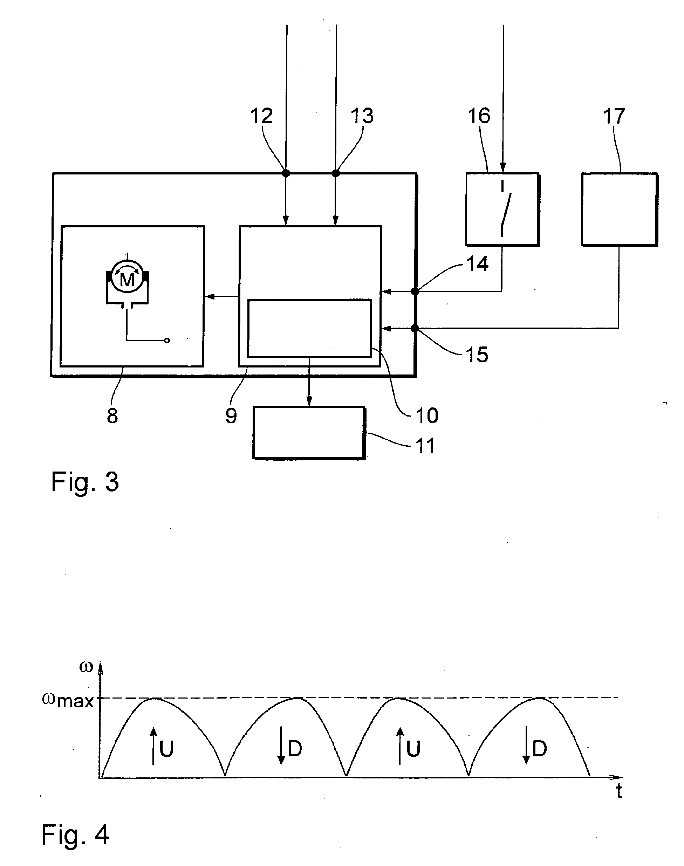

Die Scheibenwischerarme 2, 3 bilden einen Teil der gesamten Wisch-Wasch-Einrichtung, deren Steuer- und Antriebselemente in Fig. 3 gezeigt sind. Insoweit ist zur Drehbetätigung der Scheibenwischerarme 2, 3 ein Wischermotor 8 vorgesehen, der über eine entsprechende Steuerelektronik 9 gesteuert wird. In die Steuerelektronik 9 ist die Förderpumpen-Steuerung 10 integriert, die mit der Förderpumpe 11 der Wisch-Wasch-Einrichtung gekoppelt ist und diese entsprechend ansteuert.

Eingangsseitig weist die Steuerelektronik 9 Signaleingänge 12, 13 auf, über die für die momentane Geschwindigkeit des Fahrzeuges sowie die Außentemperatur repräsentative Eingangssignale eingespeist werden. Diese Signale stehen als Parameter im Bordnetz zur Verfügung, da sie für andere Zwecke ohnehin benötigt werden. Zwei weitere Signaleingänge 14, 15 sind mit einem Lenkstock-Schalter 16 zur Aktivierung der Waschfunktion sowie einem Regensensor 17 gekoppelt. Über den Lenkstock-Schalter 16 kann der Fahrer direkt einen Reinigungsvorgang initiieren.

In der Steuerelektronik 9 ist nun ein Betriebsprogramm derart implementiert, dass die Geschwindigkeit der Scheibenwischerarme 2, 3 über eine entsprechende Ansteuerung des Wischermotors 8 sowie die Förderzeiten der Förderpumpe 11 adaptiv gesteuert werden.

Dies ist ausgehend vom Stand der Technik zu erläutern, der in Fig. 4 wiedergegeben ist. Dieses Diagramm zeigt auf der y-Achse die Winkelgeschwindigkeit der Scheibenwischerarme 2, 3 in Abhängigkeit der Zeit t über zwei Reinigungszyklen hinweg. Es ist erkennbar, dass die Maximalgeschwindigkeit ωₘₐₓ beim Aufwärtshub (siehe Pfeil U) derjenigen beim Abwärtshub (siehe Pfeil D) entspricht.

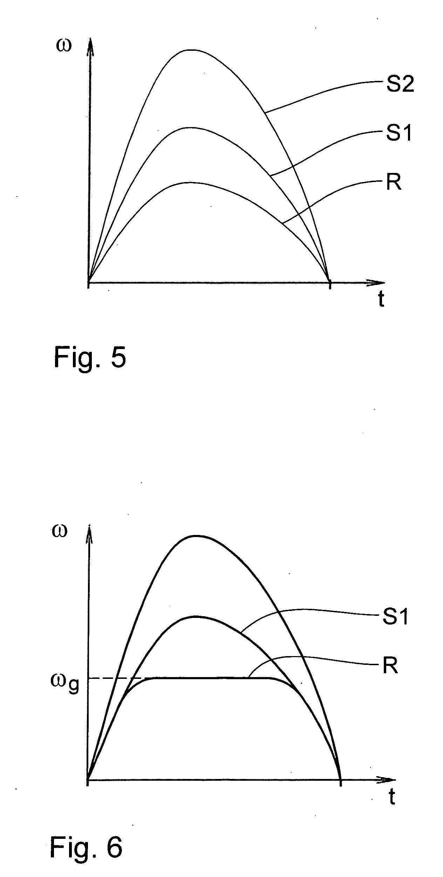

Erfindungsgemäß ist nun vorgesehen, die Wischergeschwindigkeit während des Reinigungsvorgangs so adaptiv zu steuern, dass eine Verbesserung des Reinigungsergebnisses erzeugt wird. Dies ist anhand von Fig. 5 zu erläutern. Dort zeigen die Kurven S1 und S2 die Winkelgeschwindigkeit ω der Scheibenwischerarme 2, 3 während des normalen Wisch-Betriebes in einer langsamen und einer schnellen Stufe.

Im Wisch-Wasch-Betrieb wird nun die Winkelgeschwindigkeit ω gegenüber diesen Stufen S1 und S2 deutlich, etwa auf ca. 70 % der Kurve S1 reduziert, wie durch die Kurve R erkennbar ist. Die Scheibenwischerarme 2, 3 laufen also beim Aufsprühen der Scheibenreinigungsflüssigkeit während des Aufwärtszyklus deutlich langsam über die Scheibe. Der Abwärtshub kann dann mit der Winkelgeschwindigkeitskennlinie analog Kurve S1 oder S2 erfolgen, sodass sehr schnell wieder ein Aufsprühen von Reinigungsflüssigkeit erfolgen kann.

Während bei der Kennlinie gemäß Fig. 5 die Winkelgeschwindigkeit der Scheibenwischerarme über den gesamten Aufwärtshub hinweg um die angegebene Differenz gegenüber der Kurve S1 reduziert ist, ist bei der in Fig. 6 dargestellten Kennlinie der Winkelgeschwindigkeit ω in Abhängigkeit der Winkelposition eine "Deckelung" der Winkelgeschwindigkeit ω vorgenommen. So läuft beim Aufwärtshub während eines Wischzyklus der Scheibenwischerarm anfänglich mit einem Winkelgeschwindigkeitsprofil hoch, das dem der niedrigeren Wischstufe gemäß Kurve S1 entspricht. Bei Erreichen eines bestimmten Grenzwertes ω_{g} wird die Winkelgeschwindigkeit der Scheibenwischerarme auf diesem Grenzwert konstant gehalten - siehe abgeplattete Kurve R -, bis zum Ende des Aufwärts-Wischzyklus die Winkelgeschwindigkeit wieder auf der Kurve S1 bis in die Umkehrlage heruntergefahren wird.

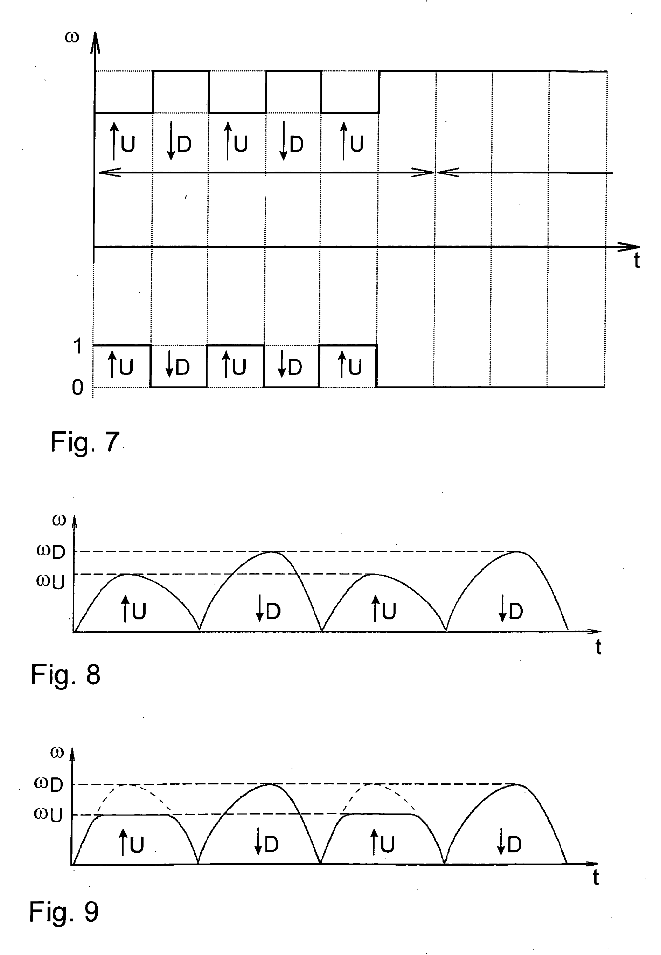

Fig. 7 gibt qualitativ die Steuerung der Winkelgeschwindigkeit ω der Scheibenwischerarme und der Aktivierung der Förderpumpe an. So ist die Wischergeschwindigkeit während der drei Aufwärtshübe erniedrigt und gleichzeitig die Förderpumpe aktiviert - "1" - (siehe Pfeile U). Während des Abwärtshubes (siehe Pfeile D), während derer die Sprühdüsen 4 der Wischerbewegung nachlaufend angeordnet sind, ist die Winkelgeschwindigkeit ω der Scheibenwischerarme normal und die Förderpumpe ausgeschaltet - "0" -.

Die Fig. 8 zeigt nun die zeitabhängige Winkelgeschwindigkeit der Wischerarme über zwei Wisch-Wasch-Zyklen. Bei der Aufwärtsbewegung (Pfeil U) ist dabei erkennbar die maximale Winkelgeschwindigkeit (ω_{U} deutlich niedriger als die maximale Winkelgeschwindigkeit ω_{D} bei der Abwärtsbewegung (Pfeil D) der Wischerarme 2, 3.

In Fig. 9 sind zwei Wisch-Wasch-Zyklen gezeigt, bei denen die Reduktion der maximalen Winkelgeschwindigkeit bei der Aufwärtsbewegung (Pfeil U) analog der "Deckelung" gemäß Fig. 6 durchgeführt wird.

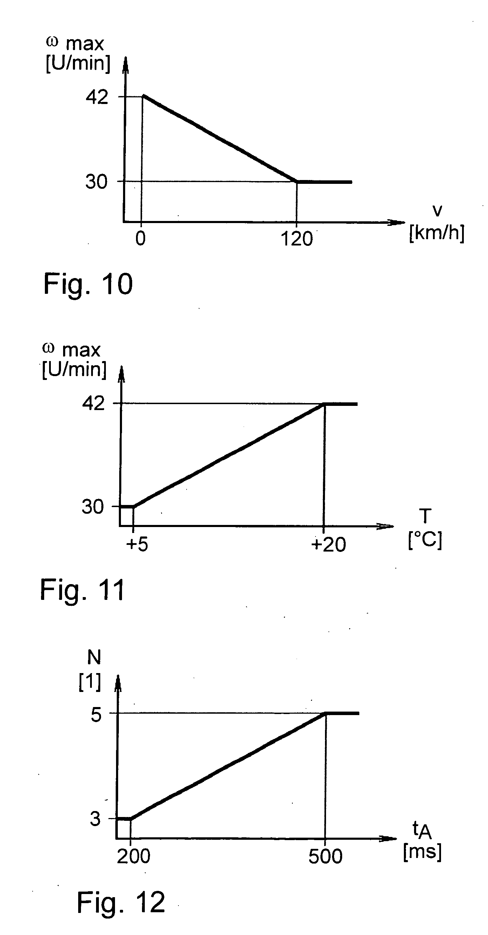

Anhand von Fig. 10 ist darzustellen, dass die Steuerelektronik 9 aufgrund des am Signaleingang 12 anstehenden Signals entsprechend der aktuellen Fahrzeuggeschwindigkeit v die maximale Winkelgeschwindigkeit Wₘₐₓ der Scheibenwischerarme während des Aufwärtshubes beim Aufsprühen von Reinigungsflüssigkeit mit zunehmender Fahrzeuggeschwindigkeit von beispielsweise 42 Wischvorgängen pro Minute bei Fahrzeugstillstand auf beispielsweise 30 Wischvorgänge pro Minute bei einer Fahrzeuggeschwindigkeit von 120 km/h reduziert.

Fig. 11 gibt die Abhängigkeit der Winkelgeschwindigkeit Wₘₐₓ der Scheibenwischerarme beim Aufwärtshub von der Außentemperatur T an. So wird bei einer höheren Außentemperatur von 20 °C mit der maximalen Wischgeschwindigkeit von 42 Waschhüben pro Minute gearbeitet, während bei unter diese Grenztemperatur fallenden Werten eine Erniedrigung der Winkelgeschwindigkeit auf einen Wert von z.B. 30 Waschhüben pro Minute bei einer Temperatur von 5 °C und darunter vorgenommen wird.

Schließlich kann das Wisch-Wasch-System auch noch durch den Fahrer aktiv beeinflusst werden, indem am Lenkstock-Schalter 16 (Fig. 3) durch eine längere Betätigungsdauer t_{A} die Anzahl N der Waschzyklen beispielsweise von drei, wie dies in Fig. 7 dargestellt ist, auf fünf Waschzyklen pro Reinigungsgang erhöht werden. Die Betätigungsdauern t_{A} des Lenkstock-Schalters liegen dabei in einem Bereich zwischen 200 und 500 ms.

## Patentansprüche

1. Verfahren zum Betrieb eines Wisch-Wasch-Systems für Kraftfahrzeug-Windschutzscheiben ( 1 ) umfassend mindestens einen Scheibenwischer (2, 3), eine Wascheinheit (4) zum Aufsprühen von Reinigungsflüssigkeit auf die Windschutzscheibe ( 1 ), eine elektronische Steuereinheit (9), mindestens einen Scheibenwischermotor (8) und eine Förderpumpe (11) für Scheibenreinigungsflüssigkeit, **dadurch gekennzeichnet, dass** die Wischergeschwindigkeit (ω) während des Reinigungsvorganges von der Steuereinheit (9) in Abhängigkeit von fahrzustands- und/oder umgebungsabhängigen Eingangsparametern (v; T) adaptiv gesteuert wird.

2. Verfahren nach Anspruch 1, **dadurch gekennzeichnet, dass** die Wischergeschwindigkeit (ω) während des Waschhubes beim Ausbringen von Reinigungsflüssigkeit reduziert wird.

3. Verfahren nach Anspruch 1 oder 2, **dadurch gekennzeichnet, dass** die Wischergeschwindigkeit (ω) während des Reinigungsvorganges in Abhängigkeit der Fahrzeuggeschwindigkeit (v) adaptiv gesteuert wird.

4. Verfahren nach einem der vorgenannten Ansprüche, **dadurch gekennzeichnet, dass** die Wischergeschwindigkeit (ω) während des Reinigungsvorganges in Abhängigkeit der Umgebungstemperatur (T) adaptiv gesteuert wird.

5. Verfahren nach einem der vorgenannten Ansprüche, **dadurch gekennzeichnet, dass** die Wischergeschwindigkeit (ω) während des Reinigungsvorganges in Abhängigkeit des Verschmutzungszustandes der Windschutzscheibe ( 1 ) adaptiv gesteuert wird.

6. Verfahren nach Anspruch 5, **dadurch gekennzeichnet, dass** der Verschmutzungsgrad mittelbar über einen Regensensor (17) erfasst wird.

7. Verfahren nach einem der vorgenannten Ansprüche, **dadurch gekennzeichnet, dass** die Anzahl der Reinigungszyklen mittels einer vom Fahrer betätigbaren Eingabeeinheit (16) variabel einstellbar ist.

8. Verfahren nach einem der vorgenannten Ansprüche, **dadurch gekennzeichnet, dass** die Förderleistung der Förderpumpe (11) für die Reinigungsflüssigkeit nach einem oder mehreren der angegebenen fahrzustands- und umgebungsabhängigen Parameter (v; T) adaptiv gesteuert wird.

9. Wisch-Wasch-Einrichtung für Kraftfahrzeug-Windschutzscheiben ( 1 ) umfassend mindestens einen Scheibenwischer (2, 3), eine Wascheinheit (4) zum Aufsprühen von Reinigungsflüssigkeit auf die Windschutzscheibe (1), eine elektronische Steuereinheit (9), mindestens einen Scheibenwischermotor (8) und eine Förderpumpe (11) für Scheibenreinigungsflüssigkeit, **dadurch gekennzeichnet, dass** die Steuereinheit (9) mit Signaleingängen (12, 13, 14, 15) für fahrzustands- und/oder umgebungsabhängige Eingangsparameter (v; T) versehen und mit einem Betriebsprogramm zur Durchführung des Verfahrens nach einem der vorgenannten Ansprüche betrieben ist.
